# EUROPEAN PATENT APPLICATION

(11) **EP 1 933 508 A1**
(43) Date of publication of application: **18.06.2008**
(21) Application number: 06810873.7
(22) Date of filing: 29.09.2006
(51) Int. Cl.: H04L 12/56

(54) **AGGREGATION MANAGEMENT METHOD, AGGREGATE NODE, AND DEAGGREGATE NODE**

(30) Priority: 30.09.2005 JP 2005289185
(71) Applicant: Matsushita Electric Industrial Co., Ltd., Kadoma-shi Osaka 571-8501 (JP)
(72) Inventor: HORI, Takako c/o Matsushita Electric Industrial Co., Ltd., 7F Twin 21 OBP Panasonic Tower 2-1-61 Shiromi Chuo-ku, Osaka 540-6207 (JP); UE, Toyoki c/o Matsushita Electric Industrial Co., Ltd., 7F Twin 21 OBP Panasonic Tower 2-1-61 Shiromi Chuo-ku, Osaka 540-6207 (JP)
(74) Representative: Hössle, Markus
(86) International application number: PCT/JP2006/319475
(87) International publication number: WO 2007/037372

(57) **Abstract**

A technology is disclosed that provides an aggregation management method, an aggregate node, and a deaggregate node that can quickly and efficiently manage aggregation. The technology includes a step at which, when an aggregate node 111 moves from an aggregated area 120, the moved aggregate node transmits a release request message to a deaggregate node 113 positioned on the edge of the area before movement. The release request message requests release of a QoS path within the area configured from the position on the edge of the area before movement of the aggregate node itself to the position of the deaggregate node. The technology also includes a step at which the deaggregate node that receives the release request message releases the QoS path configured within the area based on the release request message.

## Description

### TECHNICAL FIELD

The present invention relates to an aggregation management method, an aggregate node, and a deaggregate node. The aggregation management method, the aggregate node, and the deaggregate node is used to manage aggregation in a communication network including aggregated sessions.

### BACKGROUND ART

Tunneling technology is widely used in a mobile communication network. For example, the tunnel technology is used between a mobile node (MN) and a home agent (HA) in mobile internet protocol (MIP), between a MN and a mobility anchor point (MAP) in hierarchical mobile IP (HMIP), and between a MN and a gateway general packet radio service (GPRS) support node (GGSN) in 3^{rd} Generation Partnership Project (3GPP). Within these tunnels, data traffics of different sessions are aggregated. When an additional service (refer to Non-Patent Documents 1 and 2, below), such as a Quality of Service (QoS) guarantee, is provided to these data traffics using path coupled signaling, such as Resource reservation Protocol (RSVP) and Next Steps In Signaling (NSIS), aggregation is performed within the tunnel for the signaling. In other words, an end-to-end signaling message is sent outside of the tunnel. A signaling message for aggregation is sent within the tunnel. Mapping of these signalings is performed at an entrance and an exit of the tunnel.

At the same time, in NSIS, a QoS path is required to be established before the MN moves or preparation for establishing the QoS path is required to be made, such that the QoS can be received without interruption. To prevent double resource reservation from occurring at this time between a current QoS path and a new QoS path, a section at which the two paths overlap is required to be identified and suitable processing is required to be performed. To solve this issue, various proposals are currently being made within the NSIS working group (WG). For example, as in a technology disclosed in Non-Patent Document 3 below, a following method and the like are proposed. A message including a session identifier that is currently being used is transmitted to a proxy on a subnet that is a movement destination, before a node moves. The proxy then transmits the message including the session identifier over a path on which the QoS path is to be newly established. As a result, a QoS NSIS entity (QNE) at which the current path and the new path start to overlap, namely a crossover node (CRN), is identified. Establishment of a new path, updating of a path, and release of a previous path are performed using the CRN.

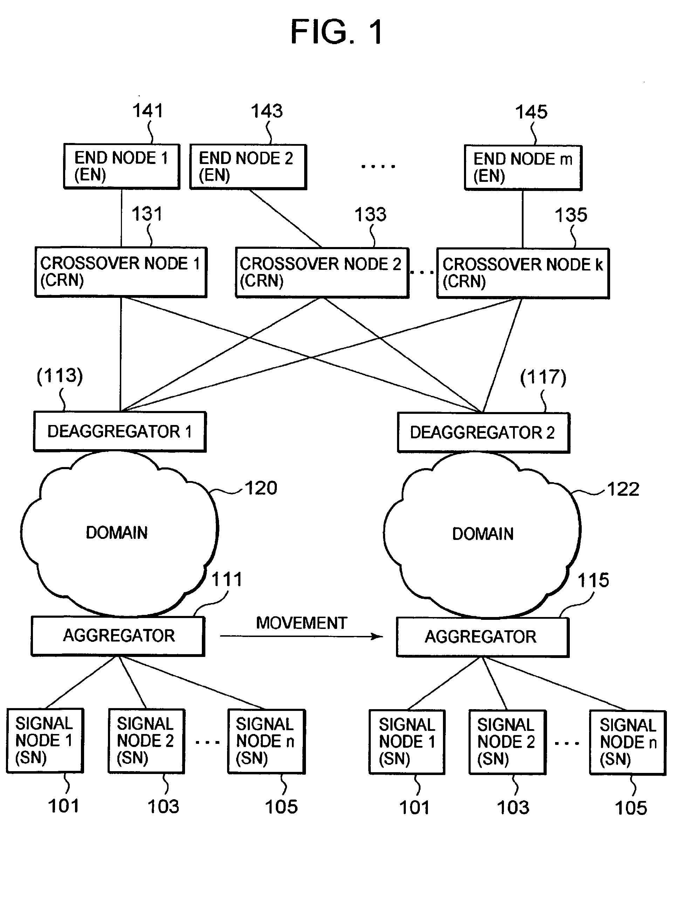

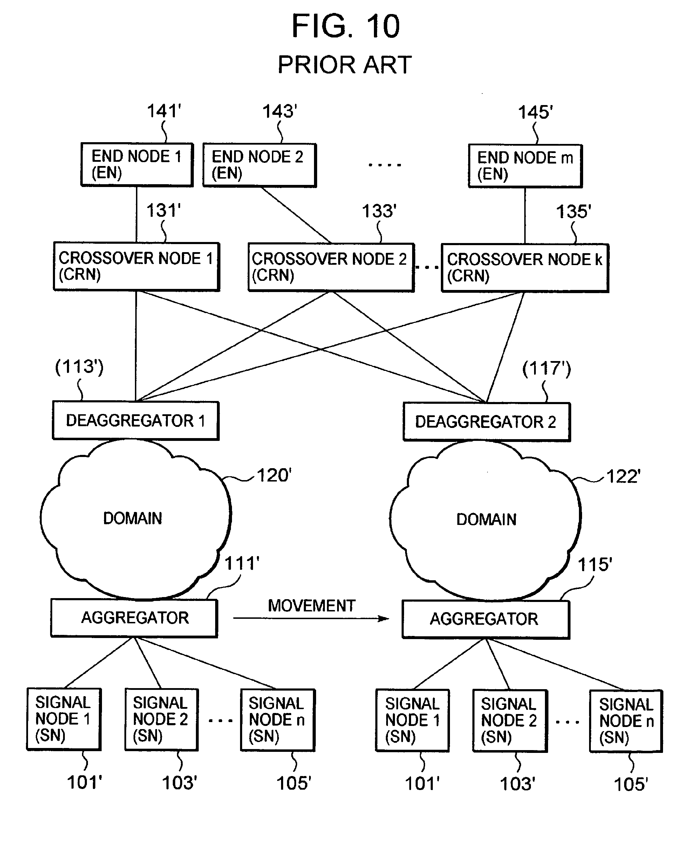

Here, as shown in Fig. 10, a plurality of MN (signal node [SN] 101' to SN105') respectively communicate with communication partner nodes (end node [EN] 141' to EN 145'), via a domain 120'. Sessions are aggregated within the domain 120'. An additional service (QoS guarantee service, herein) is provided to each session through use of a method such as NSIS. In this sate, when an aggregator 111' moves and reaches a position of an aggregator 115', a procedure for releasing a tunnel QoS path established between the aggregator 111' and a deaggregator 113' (when, for example, the existing NSIS procedure is used) is as follows. m, k, and n in Fig. 10 are arbitrary natural numbers. The number of each constituent element provided is not limited to those shown in Fig. 10. The same applies to Fig. 1, described hereafter.

First, the MN sends a message for establishing a new QoS path to respective communication partner nodes at the movement destination through the aggregator 115' and a deaggregator 117'. Each CRN (CRN 131' to 135') is discovered. To release the previous QoS path, each CRN transmits a message for release (referred to as a tear message) towards a direction in which the aggregator 111' had been present. Every time the tear message reaches the deaggregator 113', the deaggregator 113' compares information in the message (end-to-end QoS path) and tunnel QoS path information. To release the QoS within the tunnel that has been reserved for this path, the deaggregator 113' sends a message for updating into the tunnel. When the tear messages from all CRN reaches the deaggregator 113' and the reserved QoS within the tunnel is zero, the deaggregator 113' transmits the tear message for releasing the tunnel QoS path in the direction in which the aggregator 111' had been present.
Patent Document 1: US2004/0260796 A1 "Method and arrangement in an ip network"
Patent Document 2: US6069889 A "Aggregation of data flows on switched network paths"
Non-Patent Document 1: R. Braden, et al. "Resource Reservation Protocol(RSVP)", RFC 2205, September 1997
Non-Patent Document 2: IETF Next Steps In Signaling(NSIS) (http://www.ietf.org/html.charters/nsis-charter.html)
Non-Patent Document 3: T.Ue,T.Sanda,K.Honma,"QoS Mobility Support with Proxy-assisted Fast Crossover Node Discovery", WPMC2004,September 2004
Non-Patent Document 4: J. Manner (ed.), "NSLP for Quality-of-Service Signaling", draft-ietf-nsis-qos-nslp-11, June 2006, work in progress

However, the deaggregator 113' cannot send the tear message for releasing the tunnel QoS path until after receiving the tear message (for respective end-to-end QoS paths) from all CRN. Therefore, time is required until the tunnel QoS path is released. The deaggregator 113' sends an update message into the tunnel each time a tear message (for respective end-to-end QoS paths) is received from all CRN. Therefore, the number of signaling messages flowing through the tunneling section until the tunnel QoS path is released increases. A load is placed on the deaggregator 113' to mapping the tear message with information on the inside of the tunnel, each time a tear message (for respective end-to-end QoS paths) is received from all CRN. If an error occurs in even one tear message sent from a CRN before reaching the deaggregator 113', the tunnel QoS path is not released (state is maintained until timeout). These issues are considered to similarly arise when the aggregator is the MN in Fig. 10 and the MN communicates with a plurality of partners using a plurality of sessions. Several inventions (refer to Patent Documents 1 and 2, above) attempt to resolve aggregation problems occurring within a communication network. However, these inventions are related to QoS management and are unrelated to signaling. Mobility support is not taken into consideration.

### DISCLOSURE OF THE INVENTION

The present invention has been achieved in light of the above-described problems. An object of the present invention is to provide an aggregation management method, an aggregate node, and a deaggregate node that can quickly and efficiently manage aggregation.

In order to achieve the object, an aggregation management method is provided in a communication network in which a mobile node and a communication partner node that is a communication partner of the mobile node communicate over an area (domain) in which signaling sessions between the mobile node and the communication partner node are aggregated by an aggregate node. The aggregate node and a deaggregate node are positioned on an edge of the aggregated area. A relay node that relays a signaling message between the deaggregate node and the communication partner node is provided. The aggregation management method includes a step at which, when the aggregate node moves from the aggregated area, the moved aggregate node transmits a release request message to the deaggregate node positioned on the edge of the area before movement. The release request message requests release of a QoS path within the area configured from the position on the edge of the area before movement of the aggregate node itself to the position of the deaggregate node. The aggregation management method also includes a step at which the deaggregate node that receives the release request message releases the QoS path configured within the area based on the release request message. As a result of the configuration, the aggregation can be quickly and efficiently managed. The aggregate node and the deaggregate node are also respectively referred to as an aggregator and a deaggregator, hereinafter.

In the aggregation management method of the invention, a preferred aspect of the invention is that the release request message includes identifying information of the QoS path configured within the area. As a result of the configuration, the QoS path to be released can be identified.

In the aggregation management method of the invention, a preferred aspect of the invention is that, before the aggregate node moves, the aggregate node performs a processing to detect a crossover node at which new and old communication paths converge and separate on the communication network because of the movement. As a result of the configuration, the QoS path from the deaggregate node to the crossover node can also be released.

In the aggregation management method of the invention, a preferred aspect of the invention is that, when the crossover node is detected, the aggregate node includes information related to the crossover node in the release request message. As a result of the configuration, the QoS path from the deaggregate node to the crossover node can also be released.

In the aggregation management method of the invention, a preferred aspect of the invention is that, when the release request message including the information related to the crossover node is received, the deaggregate node releases a QoS path from the deaggregate node itself to the crossover node. As a result of the configuration, needless consumption of network resources can be suppressed.

In the aggregation management method of the invention, a preferred aspect of the invention is that, before moving, the aggregate node transmits a processing request message to a node that takes over the processing to detect the crossover node at which new and old communication paths converge and separate on the communication network because of the movement. The node receiving the processing request message transmits a detection message for detecting the crossover node towards the communication partner node. The relay node that intermediately relays the detection message or relays the detection message returning from the communication partner node judges whether the relay node itself is the crossover node based on the detection message and routing state information held by the relay node itself. When the relay node judges itself to be the crossover node, the relay node transmits a communication message to the deaggregate node. The communication message includes information stating that the relay node itself is the crossover node. As a result of the configuration, the QoS path from the deaggregate node to the crossover node can also be released.

In the aggregation management method of the invention, a preferred aspect of the invention is that, when the release request message is received, the deaggregate node releases the QoS path from the deaggregate node itself to the crossover node based on the information included in the communication message received from the relay node. As a result of the configuration, needless consumption of network resources can be suppressed.

In the aggregation management method of the invention, a preferred aspect of the invention is that the processing request message includes at least information on an IP address of the communication partner node, information on a session ID of the signaling session, and information on an IP address of the deaggregate node. As a result of the configuration, the crossover node can be identified.

In the aggregation management method of the invention, a preferred aspect of the invention is that the detection message includes at least the information on the session ID of the signaling session and the information on the IP address of the deaggregate node included in the processing request message. As a result of the configuration, information on the detected crossover node can be transmitted to the deaggregate node.

In the aggregation management method of the invention, a preferred aspect of the invention is that the node is a deaggregate node positioned on an edge of an aggregated area configured after the movement of the aggregate node. As a result of the configuration, aggregation management can be performed efficiently.

In the present invention, an aggregate node is provided in a communication network in which a mobile node and a communication partner node that is a communication partner of the mobile node communicate over an area in which signaling sessions between the mobile node and the communication partner node are aggregated by the aggregate node. The aggregate node and a deaggregate node are positioned on an edge of the aggregated area. A relay node that relays a signaling message between the deaggregate node and the communication partner node is provided. The aggregate node includes a message generating means that, when the aggregate node itself moves from the aggregated area, generates a release request message. The release request message requests that the deaggregate node positioned on the edge of the area before movement release a QoS path within the area configured from the position on the edge of the area before movement of the aggregate node itself to the position of the deaggregate node. The aggregate node also includes a transmitting means that transmits the generated release request message to the deaggregate node. As a result of the configuration, the aggregation can be quickly and efficiently managed.

In the aggregate node of the invention, a preferred aspect of the invention is that the message generating means includes identifying information of the QoS path configured within the area in the release request message. As a result of the configuration, the QoS path to be released can be identified.

In the aggregate node of the invention, a preferred aspect of the invention is that the aggregate node includes a crossover node detecting means. The crossover node detecting means performs a processing to detect a crossover node at which new and old communication paths converge and separate on the communication network because of the movement, before the aggregate node moves. As a result of the configuration, the QoS path from the deaggregate node to the crossover node can also be released.

In the aggregate node of the invention, a preferred aspect of the invention is that, when the crossover node is detected, the message generating means includes information related to the crossover node in the release request message. As a result of the configuration, the QoS path from the deaggregate node to the crossover node can also be released.

In the aggregate node of the invention, a preferred aspect of the invention is that the message generating means generates a processing request message for performing a processing to detect a crossover node at which new and old communication paths converge and separate on the communication network because of the movement, before the aggregate node moves. The transmitting means transmits the generated processing request message to a node taking over the process for detecting the crossover node. As a result of the configuration, the crossover node can be detected.

In the aggregate node of the invention, a preferred aspect of the invention is that the message generating means includes at least information on an IP address of the communication partner node, information on a session ID of the signaling session, and information on an IP address of the deaggregate node in the processing request message. As a result of the configuration, the crossover node can be identified.

In the aggregate node of the invention, a preferred aspect of the invention is that the node is a deaggregate node positioned on an edge of an aggregated area configured after the aggregate node itself moves. As a result of the configuration, aggregation management can be performed efficiently.

In the present invention, a deaggregate node is provided in a communication network in which a mobile node and a communication partner node that is a communication partner of the mobile node communicate over an area in which signaling sessions between the mobile node and the communication partner node are aggregated by an aggregate node. The aggregate node and the deaggregate node are positioned on an edge of the aggregated area. A relay node that relays a signaling message between the deaggregate node and the communication partner node is provided. The deaggregate node includes a receiving means that receives a release request message for requesting release of a QoS path within the area configured from a position on the edge of the area before movement of the aggregate node from the area to the position of the deaggregate node itself. The deaggregate node also includes a release processing means that releases the QoS path configured within the area based on the received release request message. As a result of the configuration, aggregation can be quickly and efficiently managed.

In the deaggregate node of the invention, a preferred aspect of the invention is that the release request message received by the receiving means includes identifying information of the QoS path configured within the area. As a result of the configuration, the QoS path to be released can be identified.

In the deaggregate node of the invention, a preferred aspect of the invention is that, when the receiving means receives the release request message including information related to a crossover node at which new and old communication paths converge and separate on the communication network because of the movement of the aggregate node, the release processing means releases a QoS path from the deaggregate node itself to the crossover node. As a result of the configuration, needless consumption of network resources can be suppressed.

In the deaggregate node of the invention, a preferred aspect of the invention is that, when the receiving means receives the release request message, the release processing means releases, based on information included in a communication message received from the relay node including information stating that the relay node is a crossover node at which new and old communication paths converge and separate on the communication network because of the movement of the aggregate node, a QoS path from the deaggregate node itself to the crossover node. As a result of the configuration, needless consumption of network resources can be suppressed.

The aggregation management method, the aggregate node, and the deaggregate node of the present invention are configured as described above. Aggregation can be quickly and efficiently managed.

### BRIEF DESCRIPTION OF THE DRAWINGS

Fig. 1 is a schematic diagram of an example of a network structure in an aggregation management method according to a first embodiment of the present invention;
Fig. 2 is a sequence chart of an example of an operation sequence in the aggregation management method according to the first embodiment of the invention;
Fig. 3 is a block diagram of an example of a configuration of an aggregate node according to the first embodiment of the invention;
Fig. 4 is a block diagram of an example of a configuration of a deaggregate node corresponding to before the movement of the aggregator according to the first embodiment of the invention;
Fig. 5 is a sequence chart of an example of an operation sequence in an aggregation management method according to a second embodiment of the invention;
Fig. 6 is a block diagram of an example of a configuration of an aggregate node according to the second embodiment of the invention;
Fig. 7 is a sequence chart of an example of an operation sequence (direction of data flow is from a signal node to an end node side) in an aggregation management method according to a third embodiment of the invention;
Fig. 8 is a sequence chart of an example of an operation sequence (direction of data flow is from an end node to a signal node side) in the aggregation management method according to the third embodiment of the invention;
Fig. 9 is a block diagram of an example of a configuration of a proxy in the aggregation method according to the third embodiment; and
Fig. 10 is a schematic diagram of a conventional network configuration including an aggregated session.

### BEST MODE FOR CARRYING OUT THE INVENTION

### [First Embodiment]

Hereafter, an aggregation management method, an aggregate node, and a deaggregate node according to a first embodiment of the present invention will be described with reference to Fig. 1 to Fig. 4. Fig 1 shows an example of a network configuration in the aggregation method according to the first embodiment of the invention. Fig. 1 only shows required network elements related to processing. However, a node that can process signaling can be further provided between a deaggregator 113 and an end node 141. k, m, and n used in Fig. 1 indicate arbitrary natural numbers used to explain the first embodiment of the invention. It is clear to a person skilled in the art that the actual value does not affect the effective operation according to the first embodiment of the invention. In Fig. 1 to Fig. 4, an aggregator 111 (and an aggregator 115) is shown to be a separate node from signal node 101 to signal node 105. However, the aggregator 111 (and the aggregator 115) can have function as the signal node 101 to signal node 105. For example, the aggregator 111 (and the aggregator 115) and the signal node 101 to signal node 105 can be a single node.

As shown in Fig. 1, sessions used by nodes (signal node 101 to signal node 105) under the aggregator 111 and the deaggregator 113, and communication partner nodes (end node 141 to end node 145) are aggregated between the aggregator 111 and the deaggregator 113. A tunnel QoS path is established. At this time, to aggregate the sessions used between the lower nodes (signal node 101 to signal node 105) and communication partner nodes (end node 141 to end node 145), the aggregator 111 is required to, for example, modify an end-to-end message (a message in the sessions used between the lower nodes [signal node 101 to signal node 105] and communication partner nodes [end node 141 to end node 145]), between the aggregator 111 and the deaggregator 113, so that the end-to-end message is not processed by an internal node in a domain 120. Here, the aggregator 111 moves to a location of the aggregator 115. In accompaniment, the signal node 101 to signal node 105 also move under location of the aggregator 115. The deaggregator 113 changes to a deaggregator 117.

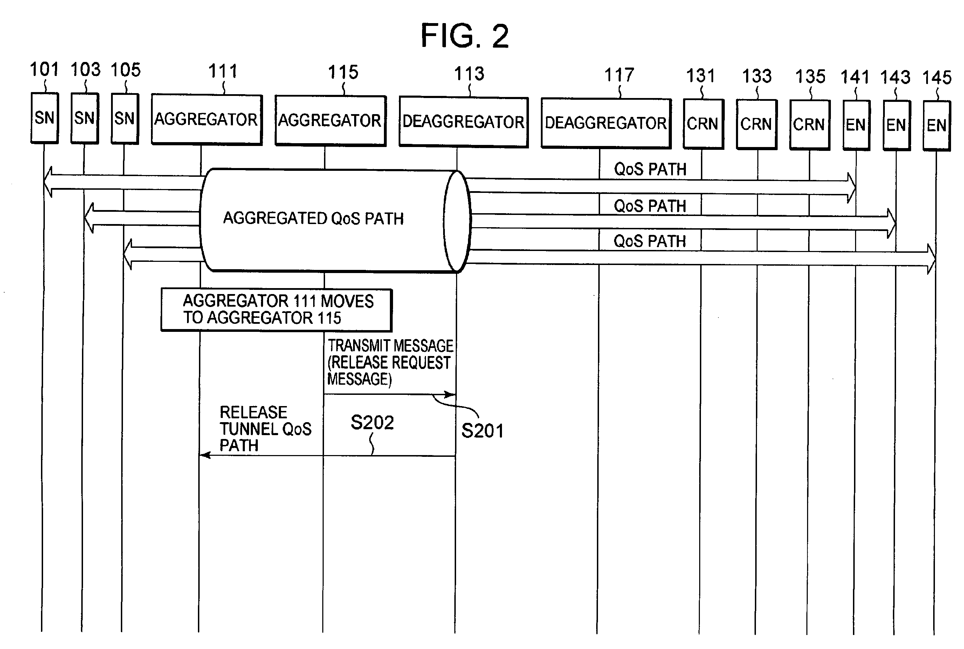

Here, an example of an operation sequence in the aggregation management method according to the first embodiment of the invention will be described, with reference to Fig. 2. As shown in Fig. 2, when the aggregator 111 moves to the location of the aggregator 115, the aggregator 115 (the aggregator 111) transmits a message to the deaggregator 113 requesting that the deaggregator 113 "release the previous tunnel QoS path (a tunnel QoS path from the deaggregator 113 to where the aggregator 111 had been located), because the aggregator has moved" (equivalent to the above-described release request message) (Step S201). Information required for the deaggregator 113 to release the previous QoS path (such as identification [ID] information of the previous tunnel QoS path) is included in the message. The deaggregator 113 that receives the message releases the previous tunnel QoS path based on the information included in the message (Step S202).

As a result of a configuration such as this, a single message is directly received from a movement destination of the aggregator. Therefore, the tunnel QoS path can be released quickly. The deaggregator 113 can release the tunnel QoS path without sending an update message into the tunnel. The deaggregator 113 can release the tunnel QoS path without referencing a mapping of information on the end-to-end QoS path and information on the inside of the tunnel. The deaggregator 113 can also release the tunnel QoS path without receiving a tear message from a CRN. Therefore, the deaggregator 113 is not affected by a tear message error occurring between the deaggregator 113 and a CRN. These effects are similarly achieved in a second embodiment and a third embodiment, described hereafter.

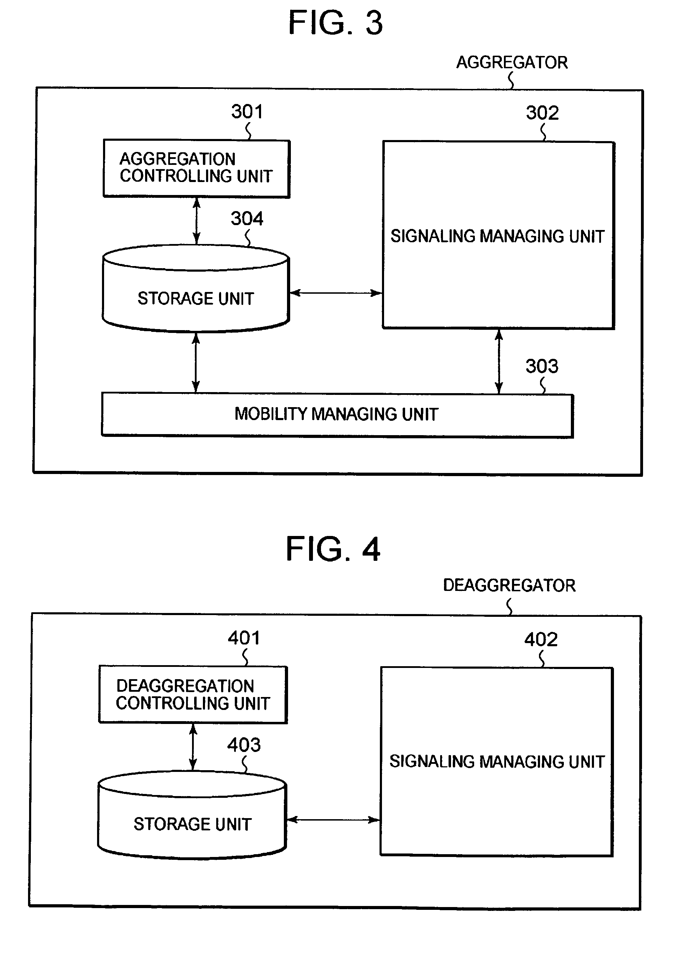

Next, an example of a configuration of an aggregate node (aggregator) according to the first embodiment of the invention will be described with reference to Fig. 3. As shown in Fig. 3, the aggregator includes an aggregation controlling unit 301, a signaling managing unit 302 (equivalent to the above-described transmitting means), a mobility managing unit 303 (equivalent to the above-described message generating means), and a storage unit 304. The aggregation controlling unit 301 controls an actual aggregation of data communication sessions. Control performed by the aggregation controlling unit 301 includes, for example, filtering data packets, and adding a new header to a packet and encapsulating the packet when tunneling is required.

The signaling managing unit 302 controls a received signaling message and processes the signaling message. For example, the signaling managing unit 302 sends a release request message to the deaggregator 113. The mobility managing unit 303 maintains and manages a trail of mobility status of the aggregator. For example, the mobility managing unit 303 generates a release request message for releasing the previous tunnel QoS path. The storage unit 304 stores, for example, related information on a current end-to-end signaling message and the aggregated sessions. The related information includes ID information of the previous tunnel QoS path and the like. The storage unit 304 can also store information requiring storage through a series of processing. Processing performed by each section of the aggregator according to the first embodiment of the invention is merely an example. Another section can perform a processing performed by a certain section.

Next, an example of a configuration of a deaggregate node (the deaggregator 113, herein) corresponding to before the movement of the aggregate node according to the first embodiment of the invention, will be described with reference to Fig. 4. As shown in Fig. 4, the deaggregator includes a deaggregation controlling unit 401 a signaling managing unit 402 (equivalent to the above-described receiving means and release processing means), and a storage unit 403. The deaggregation controlling unit 401 manages a deaggregation processing of data traffic. The signaling managing unit 402 processes a received signaling message. For example, the signaling managing unit 402 receives a message (release request message) from the aggregator and releases the previous tunnel QoS path based on the received message. The storage unit 403 stores, for example, related information on a current end-to-end signaling message and the aggregated sessions. The related information includes ID information of the previous tunnel QoS path and the like. The storage unit 403 can also store information requiring storage through a series of processing. Processing performed by each unit of the deaggregator according to the first embodiment of the invention is merely an example. Another unit can perform a processing performed by a certain unit.

### [Second Embodiment]

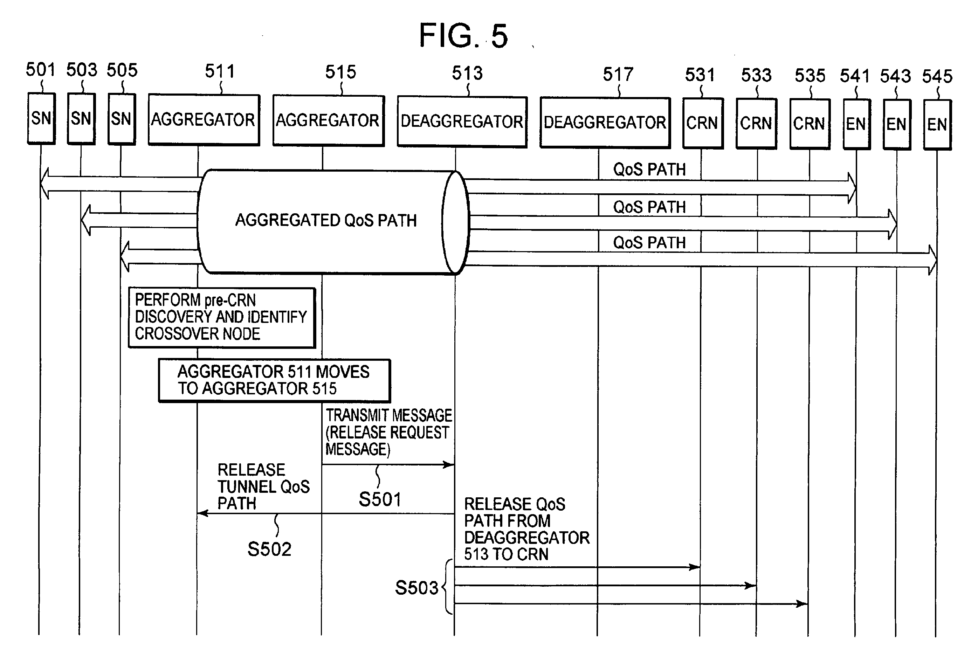

An aggregation management method, an aggregate node, and a deaggregate node according to a second embodiment of the invention will be described below, with reference to Fig. 4 to Fig. 6. A network configuration in the aggregation management method according to the second embodiment of the invention is the same as that according to the first embodiment. Explanation thereof is omitted. As shown in Fig. 5, after an aggregator 511 decides to move to a position of an aggregator 515, the aggregator 511 performs a pre-CRN discovery for lower nodes (signal node 501 to signal node 505) and identifies crossover nodes (CRN 531 to CRN 535). A pre-CRN discovery method is disclosed in, for example, the above-described Non-Patent Document 3. Here, details of the content are omitted. The pre-CRN discovery method is not limited thereto. The CRN can be discovered using other methods as well. In Fig. 5, the aggregator 511 (and the aggregator 515) is shown to be separate nodes from the signal node 501 to 505. However, the aggregator 511 (and the aggregator 515) can have function as the signal node 501 to signal node 505. For example, the aggregator 511 (and the aggregator 515) and the signal node 501 to signal node 505 can be a single node.

When the aggregator 511 and the lower nodes (signal node 501 to signal node 505) exchange information related to mobility, each node can perform pre-CRN discovery and send information on the identified CRN to the aggregator 511. Pre-CRN discovery can be performed in advance using a proxy (not shown) of a nearby subnetwork to which the aggregator 511 may move, rather than when the aggregator 511 decides to move.

The aggregator 511 moves to a location of the aggregator 515. In accompaniment, the signal node 501 to signal node 505 also move under location of the aggregator 515. The deaggregator 513 changes to the deaggregator 517. The aggregator 515 (the aggregator 511) transmits a message to the deaggregator 513 requesting that the deaggregator 513 "release the previous tunnel QoS path (a tunnel QoS path from the deaggregator 513 to where the aggregator 511 had been located), because the aggregator has moved" (equivalent to the above-described release request message) (Step S501). Information required for the deaggregator 513 to release the previous QoS path (such as ID information of the previous tunnel QoS path) is included in the message. The message also includes information on each CRN 531 to CRN 535 identified through pre-CRN discovery.

The deaggregator 513 that receives the message releases the previous tunnel QoS path based on the information included in the message (Step S502). At the same time, the deaggregator 513 releases the QoS paths from the deaggregator 513 to each CRN (CRN 531 to CRN 535) (Step S503).

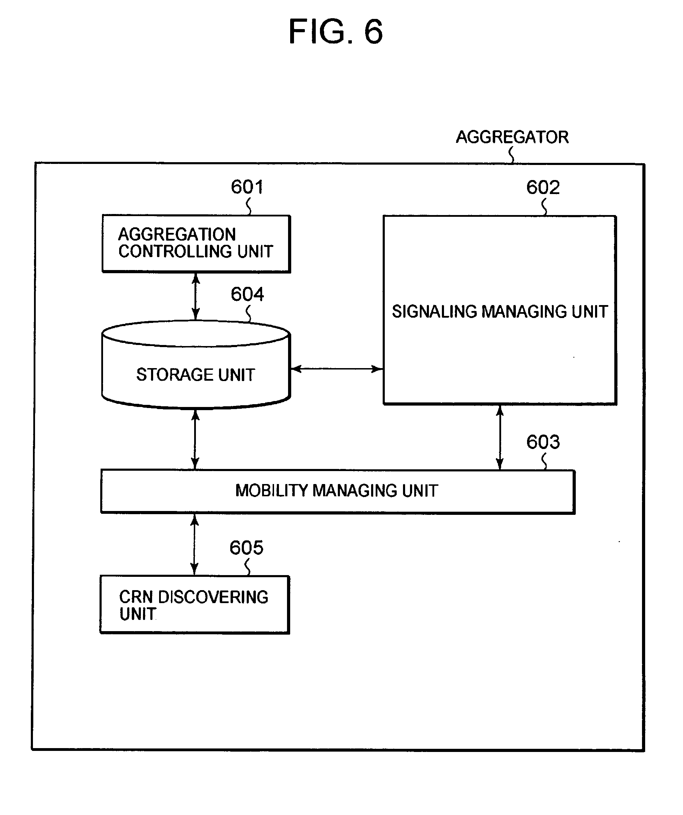

Next, an example of a configuration of an aggregate node (aggregator) according to the second embodiment of the invention will be described, with reference to Fig. 6. As shown in Fig. 6, the aggregator includes an aggregation controlling unit 601, a signaling managing unit 602 (equivalent to the above-described transmitting means), a mobility managing unit 603 (equivalent to the above-described message generating means), a storage unit 604, and a CRN discovering unit 604 (equivalent to the above-described crossover node detecting means). The aggregation controlling unit 601 controls the actual aggregation of the data communication sessions. Control performed by the aggregation controlling unit 601 includes, for example, filtering data packets, and adding a new header to a packet and encapsulating the packet when tunneling is required.

The signaling managing unit 602 controls a received signaling message and processes the signaling message. For example, the signaling managing unit 602 sends a release request message to the deaggregator 513. The mobility managing unit 603 maintains and manages a trail of mobility status of the aggregator. For example, the mobility managing unit 603 generates the release request message for releasing the previous tunnel QoS path. The storage unit 604 stores, for example, related information on a current end-to-end signaling message and the aggregated sessions. The related information includes ID information of the previous tunnel QoS path and the like. The storage unit 604 can also store information requiring storage through a series of processing.

The CRN discovering unit 605 performs a processing to discover the CRN in advance. A specific example is as follows. The CRN discovering unit 605 generates a message including information required for discovering the CRN (such as information on the session ID of each end-to-end QoS path). The generated message is transmitted to a proxy (not shown) that performs CRN discovery using the signaling managing unit 602. The message can also include other information (such as information on flow ID for uniformly identifying the current flow and path type ID). The CRN discovering unit 605 receives the information on the CRN discovered by the proxy (not shown). The mobility managing unit 603 generates the message (release request message) including the received information on the CRN. The signaling managing unit 602 transmits the message to the deaggregator 513. Details of CRN discovery by the proxy is disclosed in the above-described Non-Patent Document 3 and the like. When another device, such as a lower node (signal node 501 to signal node 505), performs CRN discovery, the aggregator is not required to have the CRN discovering unit 605. The aggregator receives the information on the CRN identified by each node and transmits a message including the pieces of information on the CRN to the deaggregator 513. Processing performed by each unit of the aggregator according to the second embodiment of the invention is merely an example. Another unit can perform a processing performed by a certain unit.

Next, an example of a configuration of a deaggregate node (the deaggregator 513, herein) corresponding to before the movement of the aggregator according to the second embodiment of the invention, will be described. A block diagram of constituent elements of the deaggregate node according to the second embodiment of the invention is the same as the block diagram of the deaggregate node according to the first embodiment shown in Fig. 4. Therefore, the deaggregate node according to the second embodiment of the invention is described with reference to Fig. 4. As shown in Fig. 4, the deaggregator includes the deaggregation controlling unit 401, the signaling managing unit 402 (equivalent to the above-described receiving means and the release processing means), and a storage unit 403. The deaggregator according to the second embodiment of the invention operates in a similar manner to the deaggregator according to the first embodiment. However, the deaggregator (such as the signaling managing unit 402) according to the second embodiment further releases the QoS paths from the deaggregator itself (the deaggregator 513) to each CRN (CRN 531 to CRN 535). Processing performed by each unit of the deaggregator according to the second embodiment of the invention is merely an example. Another unit can perform a processing performed by a certain unit.

### [Third Embodiment]

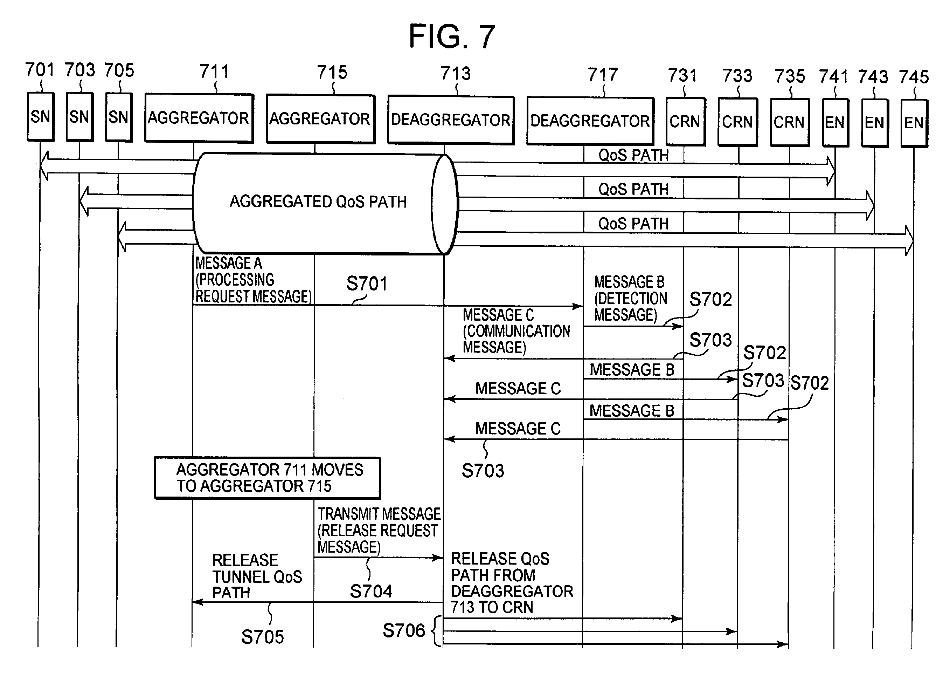

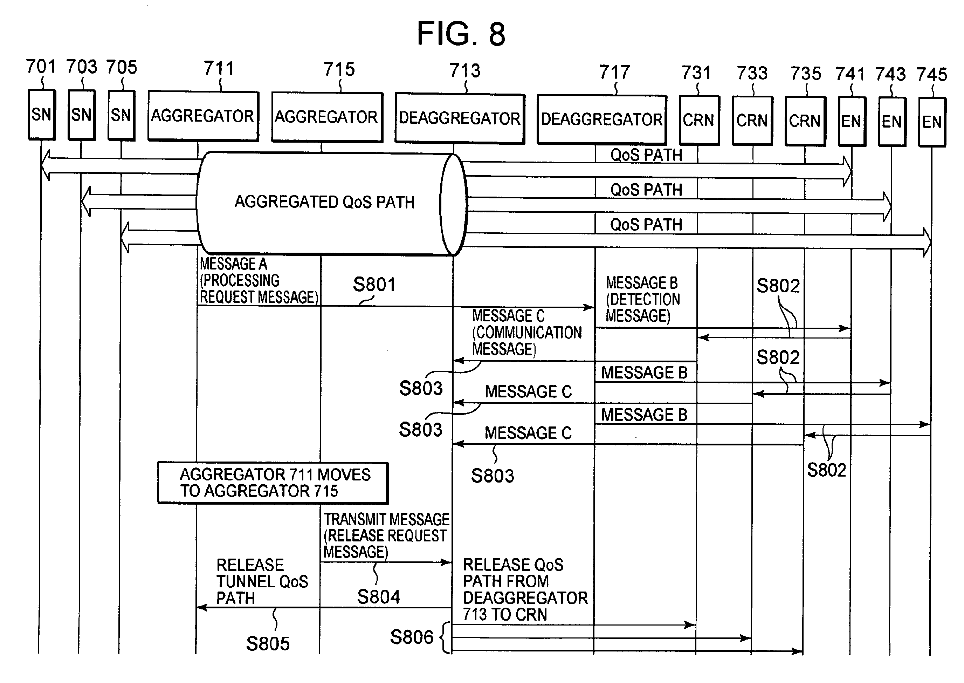

An aggregation management method, an aggregate node, and a deaggregate node according to a third embodiment of the invention will be described below, with reference to Fig. 3, Fig. 4, and Fig. 7 to Fig. 9. A network configuration in the aggregation management method according to the third embodiment of the invention is the same as those according to the first embodiment and the second embodiment. Explanation thereof is omitted. As shown in Fig. 7, after an aggregator 711 decides to move to a position of an aggregator 715, the aggregator 711 transmits a message (the message is a message A [processing request message], herein) to a proxy to start CRN discovery for the lower nodes (signal node 701 to signal node 705) (Step S701). Here, the proxy is a deaggregator 717. In Fig. 7 and Fig. 8, the aggregator 711 (and the aggregator 715) is shown to be a separate node from the signal node 701 to signal node 705. However, the aggregator 711 (and the aggregator 715) can have function as the signal node 701 to signal node 705. For example the aggregator 711 (and the aggregator 715) and the signal node 701 to signal node 705 can be a single node.

The message A includes an IP address of a communication partner node of a lower signal node and information required for pre-CRN discovery (such as information on the session ID of each end-to-end QoS path), as in the technology disclosed in Non-Patent Document 3. The message A can also include other pieces of information (such as information on the flow ID for uniformly identifying the current flow and the path type ID). Furthermore, the message A includes the IP address of the deaggregator 713 (the message A also explicitly includes information stating that the sessions are aggregated).

The proxy (deaggregator 717) that receives the message A transmits a message (the message is a message B [detection message], herein) for performing CRN discovery to each end node (Step S720). The message B includes the information required for pre-CRN discovery and the IP address of the deaggregator 713 received from the message A. Furthermore, the message B can explicitly include the information stating that the sessions are aggregated.

Each QNE that receives the message B compares a value of its own routing state and a value of the session ID included in the message B (a value of the flow ID and a value of the path type ID, if required), and a QNE adjacent to the message transmitting source (when a direction of data flow is from the signal node side to the end node side) or a QNE adjacent to a message transmitting destination (when the direction of data flow is from the end node side to the signal node side), thereby identifying whether the QNE itself is the CRN. Fig. 7 shows a sequence of when the direction of data flow is from the signal node side to the end node side. Fig. 8 is a sequence of when the direction of data flow is from the end node side to the signal node side. The above-described QNE refers to an NE (a node having NSIS function) having NSLP (NSIS signaling layer protocol) for QoS. Details thereof are disclosed in Non-Patent Document 2.

Here, when the direction of data flow is from the signal node side to the end node side, as shown in Fig. 7, the CRN is detected while the message B is being sent to the end node. As shown in Fig. 8, when the direction of data flow is from the end node side to the signal node side, the message B is temporarily sent to the end node (Step S802). The CRN is detected while the message B is being sent from the end node to the proxy (deaggregator 717). The QNE that has recognized itself to be the CRN transmits a message (the message is a message C [communication message], herein) that states that the QNE itself is the QNE to the deaggregator 713 (Step S803).

Then, the aggregator 711 moves to the location of the aggregator 715. In accompaniment, the signal nodes (701 to 705) also move under location of the aggregator 715. The deaggregator 713 changes to the deaggregator 717. The aggregator 715 (the aggregator 711) transmits a message to the deaggregator 713 requesting that the deaggregator 713 "release the previous tunnel QoS path (a tunnel QoS path from the deaggregator 713 to where the aggregator 711 had been located), because the aggregator has moved" (equivalent to the above-described release request message) (Step S704 and Step 5804). Information required for the deaggregator 713 to release the previous QoS path (such as information on the ID of the previous tunnel QoS path) is included in the message. The deaggregator 713 that receives the message releases the previous tunnel QoS path (Step S705 and Step S805). At the same time, the deaggregator 713 releases the QoS path between the CRN acquired from the above-described processing and the deaggregator 713 itself (Step S706 and Step 5806).

Next, an example of a configuration of an aggregate node (aggregator) according to the third embodiment of the invention will be described. A block diagram of constituent elements of the aggregate node according to the third embodiment of the invention is the same as the block diagram of the aggregate node according to the first embodiment shown in Fig. 3. Therefore the aggregate node according to the third embodiment of the invention will be described with reference to Fig. 3. As shown in Fig. 3, the aggregator includes the aggregation controlling unit 301, the signaling managing unit 302 (equivalent to the above-described transmitting means), the mobility managing unit 303 (equivalent to the above-described message generating means), and the storage unit 304. The aggregation controlling unit 301 controls the actual aggregation of the data communication sessions. Control performed by the aggregation controlling unit 301 includes, for example, filtering data packets, and adding a new header to a packet and encapsulating the packet when tunneling is required.

The signaling managing unit 302 controls a received signaling message and processes the signaling message. For example, the signaling managing unit 302 sends a release request message to the deaggregator 713, sends the above-described processing request message to the proxy, and the like. The mobility managing unit 303 maintains and manages a trail of mobility status of the aggregator. For example, the mobility managing unit 303 generates a release request message for releasing the previous tunnel QoS path and generates the above-described processing request message. The storage unit 304 stores, for example, related information on a current end-to-end signaling message and the aggregated sessions. The related information includes ID information of the previous tunnel QoS path and the like. The storage unit 304 can also store information requiring storage through a series of processing. Processing performed by each unit of the aggregator according to the third embodiment of the invention is merely an example. Another unit can perform a processing performed by a certain unit.

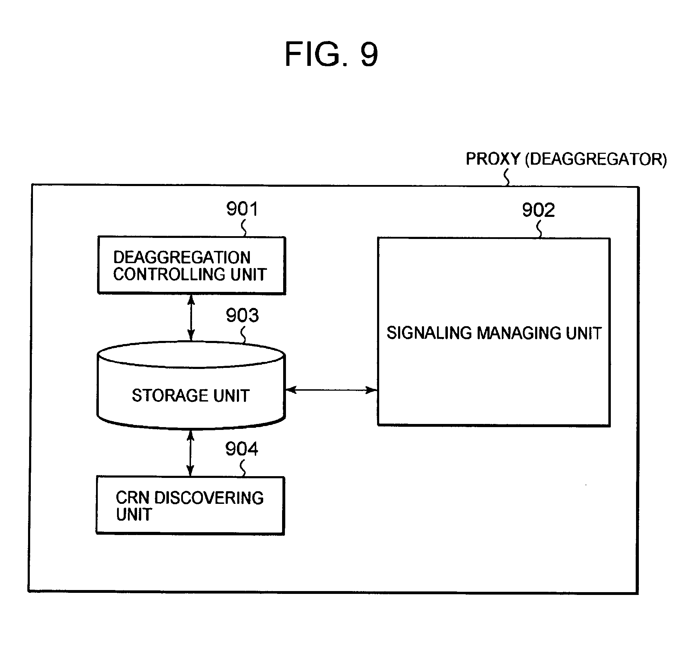

An example of a configuration of a proxy (the deaggregator 717, herein) in the aggregation management method according to the third embodiment of the invention will be described with reference to Fig. 9. As shown in Fig. 9, the proxy includes a deaggregation controlling unit 901, a signaling managing unit 902, a storage unit 903, and a CRN discovering unit 904. The deaggregation controlling unit 901 manages the deaggregation processing of data traffic. The signaling managing unit 902 processes a received signaling message. For example, the signaling managing unit 902 transmits a generated detection message to each end node. The storage unit 903 stores, for example related information of the end-to-end signaling message and the aggregated sessions. The storage unit 903 can also store information requiring storage through a series of processing. The CRN discovering unit 904 generates the detection message for performing CRN discovery. At this time, the CRN discovering unit 904 includes in the detection message information required for pre-CRN discovery and the IP address of the deaggregator 713 received from the processing request message. The detection message can explicitly include information stating that the session is aggregated. Processing performed by each unit of the proxy according to the third embodiment of the invention is merely an example. Another unit can perform a processing performed by a certain unit.

Next, an example of a configuration of a deaggregate node (the deaggregator 713, herein) corresponding to before the movement of the aggregate node (aggregator) according to the third embodiment of the invention, will be described. Here, a block diagram of constituent elements of the deaggregator node according to the third embodiment of the invention is the same as the block diagram of the deaggregate node according to the first embodiment of the invention shown in Fig. 4. Therefore, the deaggregate node according to the third embodiment of the invention will be described with reference to Fig. 4. As shown in Fig. 4, the deaggregator includes the deaggregation controlling unit 401, the signaling managing unit 402 (equivalent to the above-described receiving means and release processing means), and the storage unit 403. The deaggregation controlling unit 401 manages a deaggregation processing of data traffic. The signaling managing unit 402 processes a received signaling message. For example, the signaling managing unit 402 releases the previous tunnel QoS path based on the message received from the aggregator. At the same time, the signaling managing unit 402 also releases the QoS paths from itself (deaggregator 713) to each CRN (CRN 731 to CRN 735). The storage unit 403 stores, for example, related information on a current end-to-end signaling message and the aggregated sessions. The related information includes information on the ID of the previous tunnel QoS path and the like. The storage unit 403 can also store information requiring storage through a series of processing. Processing performed by each unit of the deaggregator according to the third embodiment of the invention is merely an example. Another unit can perform a processing performed by a certain unit.

According to the above-described first to third embodiments, an example is shown in which a plurality of signal nodes communicate with a plurality of end nodes and an aggregator performs tunneling session. However, the same method can be used when the aggregator itself is a signal node and communicates with the plurality of end nodes. The above-described tear message refers to a RESERVE message with a TEAR flag described in, for example, Non-Patent Document 4.

Each embodiment of the invention has been described above. Each functional block used in the explanations of each embodiment of the present embodiment, described above, can be realized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI. The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used. Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

The aggregation management method, the aggregate node, and the deaggregate node of the present invention can quickly and efficiently manage aggregation. Therefore, the aggregation management method, the aggregate node, and the deaggregate node of the present invention are effective as an aggregation management method, an aggregate node, and a deaggregate node managing aggregation in a communication network including aggregated sessions.

## Claims

1. An aggregation management method in a communication network in which a mobile node and a communication partner node that is a communication partner of the mobile node communicate over an area in which signaling sessions between the mobile node and the communication partner node are aggregated by an aggregate node, the aggregate node and a deaggregate node are positioned on an edge of the aggregated area, and a relay node that relays a signaling message between the deaggregate node and the communication partner node is provided, the aggregation management method comprising the steps of:
when the aggregate node moves from the aggregated area, transmitting, by the moved aggregate node, a release request message to the deaggregate node positioned on the edge of the area before movement requesting release of a QoS path within the area configured from the position on the edge of the area before movement of the aggregate node itself to the position of the deaggregate node; and
releasing, by the deaggregate node that receives the release request message, the QoS path configured within the area based on the release request message.

2. The aggregation management method according to claim 1, wherein the release request message includes identifying information of the QoS path configured within the area.

3. The aggregation management method according to claim 1, wherein, before the aggregate node moves, the aggregate node performs a processing to detect a crossover node at which new and old communication paths converge and separate on the communication network because of the movement.

4. The aggregation management method according to claim 3, wherein, when the crossover node is detected, the aggregate node includes information related to the crossover node in the release request message.

5. The aggregation management method according to claim 4, wherein, when the release request message including the information related to the crossover node is received, the deaggregate node releases a QoS path from the deaggregate node itself to the crossover node.

6. The aggregation management method according to claim 1, wherein:
before moving, the aggregate node transmits a processing request message to a node that takes over a processing to detect a crossover node at which new and old communication paths converge and separate on the communication network because of the movement;
the node receiving the processing request message transmits a detection message for detecting the crossover node towards the communication partner node;
the relay node that intermediately relays the detection message or relays the detection message returning from the communication partner node, judges whether the relay node itself is the crossover node based on the detection message and routing state information held by the relay node itself, and when the relay node judges itself to be the crossover node, transmits a communication message including information stating that the relay node itself is the crossover node to the deaggregate node.

7. The aggregation management method according to claim 6, wherein, when the release request message is received, the deaggregate node releases a QoS path from the deaggregate node itself to the crossover node based on the information included in the communication message received from the relay node.

8. The aggregation management method according to claim 6, wherein the processing request message includes at least information on an IP address of the communication partner node, information on a session ID of the signaling session, and information on an IP address of the deaggregate node.

9. The aggregation management method according to claim 8, wherein the detection message includes at least the information on the session ID of the signaling session and the information on the IP address of the deaggregate node included in the processing request message.

10. The aggregation management method according to claim 6, wherein the node is a deaggregate node positioned on an edge of an aggregated area configured after the movement of the aggregate node.

11. An aggregate node in a communication network in which a mobile node and a communication partner node that is a communication partner of the mobile node communicate over an area in which signaling sessions between the mobile node and the communication partner node are aggregated by the aggregate node, the aggregate node and a deaggregate node are positioned on an edge of the aggregated area, and a relay node that relays a signaling message between the deaggregate node and the communication partner node is provided, the aggregate node comprising:
a message generating means that, when the aggregate node itself moves from the aggregated area, generates a release request message requesting that the deaggregate node positioned on the edge of the area before movement release a QoS path within the area configured from a position on the edge of the area before movement of the aggregate node itself to the position of the deaggregate node; and
a transmitting means that transmits the generated release request message to the deaggregate node.

12. The aggregate node according to claim 11, wherein the message generating means includes identifying information of the QoS path configured within the area in the release request message.

13. The aggregate node according to claim 11, comprising a crossover node detecting means that, before the aggregate node moves, performs a processing to detect a crossover node at which new and old communication paths converge and separate on the communication network because of the movement.

14. The aggregate node according to claim 13, wherein, when the crossover node is detected, the message generating means includes information related to the crossover node in the release request message.

15. The aggregate node according to claim 11, wherein:
the message generating means generates, before the aggregate node moves, a processing request message for performing a processing to detect a crossover node at which new and old communication paths converge and separate on the communication network because of the movement; and
the transmitting means transmits the generated processing request message to a node taking over the process for detecting the crossover node.

16. The aggregate node according to claim 15, wherein the message generating means includes at least information on an IP address of the communication partner node, information on a session ID of the signaling session, and information on an IP address of the deaggregate node in the processing request message.

17. The aggregate node according to claim 15, wherein the node is a deaggregate node positioned on an edge of an aggregated area configured after the aggregate node itself moves.

18. A deaggregate node in a communication network in which a mobile node and a communication partner node that is a communication partner of the mobile node communicate over an area in which signaling sessions between the mobile node and the communication partner node are aggregated by an aggregate node, the aggregate node and the deaggregate node are positioned on an edge of the aggregated area, and a relay node that relays a signaling message between the deaggregate node and the communication partner node is provided, the deaggregate node comprising:
a receiving means that receives a release request message for requesting release of a QoS path within the area configured from a position on the edge of the area before movement of the aggregate node from the area to the position of the deaggregate node itself; and
a release processing means that releases the QoS path configured within the area based on the received release request message.

19. The deaggregate node according to claim 18, wherein the release request message received by the receiving means includes identifying information of the QoS path configured within the area.

20. The deaggregate node according to claim 18, wherein:
when the receiving means receives the release request message including information related to a crossover node at which new and old communication paths converge and separate on the communication network because of the movement of the aggregate node,
the release processing means releases a QoS path from the deaggregate node itself to the crossover node.

21. The deaggregate node according to claim 18, wherein:
when the receiving means receives the release request message,
the release processing means releases, based on information included in a communication message received from the relay node including information stating that the relay node is a crossover node at which new and old communication paths converge and separate on the communication network because of the movement of the aggregate node, a QoS path from the deaggregate node itself to the crossover node.
